# EUROPÄISCHE PATENTANMELDUNG

(11) **EP 2 418 233 A1**
(43) Veröffentlichungstag der Anmeldung: **15.02.2012**
(21) Anmeldenummer: 11005967.2
(22) Anmeldetag: 21.07.2011
(51) Int. Cl.: C08G 65/00

(54) **Polymer-gestützte Kultursysteme**

(30) Priorität: 14.08.2010 DE 102010034331
(71) Anmelder: Fraunhofer-Gesellschaft zur Förderung der angewandten Forschung e.V., 80686 München (DE)
(72) Erfinder: Pufky-Heinrich, Daniela, Dr., 70190 Stuttgart (DE); Tovar, Günter, Dr., 71111 Waldenbuch (DE); Dettling, Melanie, 72108 Rottenburg (DE); Walles, Heike, Prof. Dr., 71063 Sindelfingen (DE)
(74) Vertreter: Schrell, Andreas

(57) **Zusammenfassung**

Die vorliegende Erfindung betrifft ein degradierbares Biomaterial, ein Verfahren zu dessen Herstellung sowie die Verwendung des degradierbaren Biomaterials zur Kultivierung oder Verkapselung von Zellen oder Geweben oder zur kontrollierten Freisetzung von Biofaktoren.

## Beschreibung

Die vorliegende Erfindung betrifft ein degradierbares Biomaterial, ein Verfahren zu dessen Herstellung sowie die Verwendung des degradierbaren Biomaterials zur Kultivierung oder Verkapselung von Zellen oder Geweben oder zur kontrollierten Freisetzung von Biofaktoren.

Chemisch vernetzte, quellbare Polymernetzwerke sind für verschiedene industrielle, biotechnologische und medizinische Anwendungen im Stand der Technik bekannt und beschrieben. Beispielsweise werden aus Polymeren aufgebaute Hydrogele als Freisetzungsmatrizen für Pharmazeutika oder als Gerüst für Gewebezüchtungsanwendungen, aber auch für die biologische oder medizinische Grundlagenforschung zur Kultivierung von Zellen verwendet. Die hierbei verwendeten Biomaterialien oder Hydrogele können aus natürlichen oder synthetischen Materialien mit verschiedenen Eigenschaften hergestellt werden. Je nach Anwendungsgebiet können hierbei beispielsweise Eigenschaften wie mechanische Stabilität, Elastizität oder die Stabilität gegenüber Abbau angepasst werden. Grundsätzlich ist jedoch von Bedeutung, dass die eingesetzten Ausgangsmaterialien sowie das resultierende Biomaterial keine Toxizität aufweisen.

Im Bereich der Zellkultur häufig verwendete Materialien zur Herstellung einer künstlichen extrazellulären Matrix aus natürlich vorkommenden Materialien sind Präparationen von Kollagen. Dieses hydrophile Protein enthält Bereiche, die mit Zellen reagieren, zum Beispiel Adhäsionssignale oder Signale zur Zelldifferenzierung. Diese Signale, aber vor allem auch die dreidimensionale Natur der durch Kollagen gebildeten Matrix trägt dazu bei, dass sich Zellen in dieser Umgebung natürlicher verhalten als in konventioneller zweidimensionaler Kultur auf Oberflächen von Kulturbehältnissen. Für medizinische Anwendungen ist jedoch die tierische Herkunft des Kollagens aufgrund einer möglichen Übertragung von Krankheiten und einer eventuell auftretenden Immunogenität problematisch. Des Weiteren setzen manche Anwendungen voraus, dass sich die eingesetzte Matrix Zellen gegenüber neutral verhält, also ursprünglich keine Signalgruppen enthält beziehungsweise mit solchen erst gezielt modifiziert werden soll.

Als Alternative zu natürlich vorkommenden Materialien wurden Matrizen basierend auf synthetischen Vorläufermolekülen zur Geweberegeneration oder zur Zellkultur entwickelt. Die Vernetzungsreaktionen, die zur Bildung der synthetischen Netzwerke verwendet werden können, schließen die Radikal-Polymerisation zwischen zwei oder mehr Doppelbindungen enthaltenden Vorläufermolekülen, die nukleophile Substitutionsreaktion, Kondensations- und Additionsreaktionen und die Additionsreaktion vom Michael-Typ zwischen einem starken Nukleophil, zum Beispiel einer Thiol- oder Aminogruppe, und einem starken Elektrophil, zum Beispiel aktivierten ungesättigten Gruppen wie Acrylat- oder Vinylsulfon-Gruppen, ein.

Michael-Additionsreaktionen sind gegenüber anderen Vernetzungsreaktionen vorteilhaft, da sie eine Vernetzung der Ausgangskomponenten unter physiologischen Verbindungen erlauben. Die Vernetzung von mindestens einem ersten und einem zweiten Vorläufermolekül verläuft in einer milden selbst-selektiven Art und Weise, weitere möglicherweise aggressive oder toxische Hilfsmittel werden nicht benötigt. Die Vorläuferkomponenten reagieren daher sogar in der Anwesenheit von sensitiven biologischen Materialen unter Bildung einer Matrix miteinander. Dabei sollte eine der Vorläuferkomponenten eine Funktionalität von mindestens zwei und eine zweite Vorläuferkomponente eine Funktionalität von mehr als zwei haben, damit das System selbst-selektiv unter Bildung eines vernetzten dreidimensionalen Biomaterials reagiert. Zwar wurden in den vergangen Jahren Fortschritte mit Hilfe solcher synthetischen Matrizen gemacht, ihre Eigenschaften stimmen jedoch noch nicht mit den aus natürlich vorkommenden vorläufermolekülen hergestellten Matrizen überein. Außerdem sind für bestimmte Anwendungen noch gezielter einstellbare und veränderbare Parameter der eingesetzten Biomaterialien vonnöten.

Um eine Abbaubarkeit des Biomaterials zu gewährleisten, können abbaubare Verbindungen, beispielsweise Proteine oder Peptide, eingebaut werden, sodass proteolytisch degradierbare Biomaterialen oder Hydrogele erhalten werden. Das Abbauverhalten polymerer Netzwerke kann somit über peptidische aber auch glykolidische Bindungen in den Polymerkomponenten realisiert werden. Die starren Strukturen der Polymerkomponenten erlauben jedoch keine Variation und damit Beeinflussung der Abbaukinetik. Biokompatible Polyester wie beispielsweise Polyglykolid oder Polylaktid wurden bereits in verschiedenen Arzneimittelfreisetzungssystemen verwendet. Freisetzungs- und Abbaugeschwindigkeit der polymeren Netzwerke lassen sich hierbei über die molekulare Struktur der Polymere steuern. Polylaktide verlangsamen den Abbau, da sie im Gegensatz zu Polyglykolid über eine zusätzliche Methyleneinheit im Molekül verfügen, die einen positiven induktiven Effekt auf die Esterbindung ausübt und diese somit stabilisiert.

Biomedizinische Anwendungen von Polyestern, aufgebaut aus Addukten der Michael-Addition, finden sich unter anderem als Linker für die kontrollierte Freisetzung von Wirkstoffen. Auch hier ist eine Anpassung der Abbaukinetik in Abhängigkeit der Strukturmerkmale der Polyester möglich. Beispielsweise entsteht durch die Vernetzung von Polyethylenglykolacrylaten und Thiolgruppen aufweisenden Substanzen durch eine Michael-Addition eine hydrolytisch labile Thioether-Ester-Verbindung. Auf diese Art vernetzte Biomaterialien werden z. B. in DE 10 2007 034 580 A1, DE 20 2008 005 131 U1 und US 2009/0098083 A1 offenbart. Eine Anpassung der Abbaukinetik kann in diesem System jedoch nur über eine unterschiedliche Maschenweite des Biomaterials durch unterschiedliche Molekulargewichte der einzelnen Polymerkomponenten und über die Anzahl deren Funktionalitäten erreicht werden.

Das technische Problem der vorliegenden Erfindung liegt daher in der Bereitstellung biokompatibler Biomaterialien oder Hydrogele, insbesondere für Tissue-Engineering-Verfahren oder -Produkte, die die vorgenannten Nachteile überwinden, insbesondere deren Abbaukinetik gezielter und feiner einstellbar ist.

Die vorliegende Erfindung löst dieses technische Problem durch die Gegenstände der unabhängigen Ansprüche, insbesondere durch die Bereitstellung eines Verfahrens zur Herstellung eines degradierbaren Biomaterials, umfassend die Schritte:
a) Bereitstellen einer mindestens dreiarmigen Polyethylenglykolkomponente, wobei mindestens drei Arme der Polyethylenglykolkomponente mit jeweils einer Mercaptoalkansäure mit 1 bis 10 C-Atomen funktionalisiert sind,
b) Bereitstellen mindestens einer mit mindestens zwei Acrylat-, Vinylsulfon- oder einer Maleimidgruppen funktionalisierten oligo- oder polymeren Komponente, wobei die oligo- oder polymere Komponente ausgewählt ist aus der Gruppe bestehend aus einer mindestens zweiarmigen Polyethylenglykolkomponente, Polyvinylalkohol, Polypropylenglykol, Gelatine und Fibrinogen.
c) Vernetzen der in den Verfahrensschritten a) und b) bereitgestellten Komponenten und
d) Erhalten eines degradierbaren Biomaterials.

Im Zusammenhang mit der vorliegenden Erfindung wird unter dem Begriff "Biomaterial" ein vernetztes polymeres Netzwerk, das in Wasser quillt und über einen bestimmten Zeitraum stabil bleibt, verstanden. Die Begriffe Matrix, Hydrogel oder polymeres Netzwerk werden vorliegend synonym verwendet.

Im Zusammenhang mit der vorliegenden Erfindung wird unter dem Begriff "Biokompatibilität" oder "biokompatibel" im weitesten Sinne das Fehlen von nachteiligen Effekten, insbesondere toxischen, nekrotischen oder mutierenden Effekten auf Zellen, Gewebe, Organe oder den Körper verstanden.

Im Zusammenhang mit der vorliegenden Erfindung wird unter dem Begriff "funktionalisieren" das Modifizieren eines Moleküls oder Polymers in einer Art und Weise verstanden, die in der Anlagerung, insbesondere kovalenten Bindung, einer funktionellen Gruppe oder eines funktionellen Restes resultiert. Zum Beispiel kann ein Molekül oder Polymer durch die Anlagerung einer, insbesondere durch die Verknüpfung mit einer chemischen Gruppe funktionalisiert werden, die das Molekül oder Polymer zu einem Nukleophil oder Elektrophil macht und ihm damit eine Funktionalität verleiht, die es normalerweise nicht besitzt.

Der Begriff "Funktionalität" bezeichnet im Zusammenhang mit der vorliegenden Erfindung die Anzahl von reaktiven Stellen beziehungsweise funktionellen Gruppen eines Moleküls.

Im Zusammenhang mit der vorliegenden Erfindung wird unter dem Begriff "Vernetzung" die Bildung von kovalenten Bindungen zwischen einer Komponente, die nukleophile Thiolgruppen enthält, und einer Komponente, die elektrophile aktivierte Doppelbindungen enthält, verstanden. Die eingesetzten Komponenten bilden somit über ihre funktionellen Gruppen durch intermolekulare kovalente Bindungen ein Makromolekül. Die Vernetzung beider Komponenten führt zu einer Zunahme des Molekulargewichts des Materials. Die Begriffe Vernetzung und Gelierung werden vorliegend als Synonyme verwendet.

Im Zusammenhang mit der vorliegenden Erfindung werden unter "physiologischen Bedingungen" Bedingungen verstanden, wie sie in lebenden Wirbeltieren gefunden werden. Insbesondere bezeichnen physiologische Verbindungen vorliegend die Bedingungen im menschlichen Körper, zum Beispiel die Temperatur oder den pH-Wert.

Im Zusammenhang mit der vorliegenden Erfindung wird unter dem Begriff "Gewebe" ein Verband gleichartig oder unterschiedlich differenzierter Zellen verstanden, die einen gemeinsamen Aufgabenbereich erfüllen oder spezifische Organe bilden.

Im Zusammenhang mit der vorliegenden Erfindung wird unter dem Begriff "Kultivieren von Zellen und Geweben" jede Anwendung verstanden, bei der Zellen oder ein Zellverband zum Zwecke der Vermehrung, der Differenzierung oder der Synthese von zellulären oder extrazellulären Komponenten in das Biomaterial eingebracht werden oder einwandern können, und unter Umständen ein Gewebe bilden.

Im Zusammenhang mit der vorliegenden Erfindung wird unter einem "Biofaktor" jede natürliche oder synthetische Substanz verstanden, die einen Einfluss auf Zellen haben kann, oder Reaktionen auf/in Zellen ausüben kann und somit einen lokalen oder systemischen, biologischen, physiologischen oder therapeutischen Effekt hat.

Im Zusammenhang mit der vorliegenden Erfindung wird unter einer Mercaptoalkansäure oder einer Thioethergruppe mit 1 bis 10 C-Atomen eine Mercaptoalkansäure oder Thioethergruppe verstanden, die ein 1 bis 10 C-Atome aufweisendes Kohlenstoffgerüst aufweist. Vorzugsweise verwendet die vorliegende Erfindung eine Mercaptoalkansäure oder Thioethergruppe mit 1 bis 9, vorzugsweise 1 bis 8 C-Atomen, insbesondere 2 bis 8 C-Atomen, insbesondere 2 bis 7 C-Atomen, insbesondere 2 bis 6 C-Atomen, vorzugsweise 2 bis 5 C-Atomen, insbesondere 1, 2, 3 oder 4 C-Atomen. In besonders bevorzugter Ausführungsform kann die Mercaptoalkansäure oder Thioethergruppe in verzweigter oder unverzweigter Form vorliegen. In besonders bevorzugter Ausführungsform kann die Mercaptoalkansäure oder Thioethergruppe in verzweigter Form vorliegen und insbesondere Verzweigungsreste in Form von Methyl-, Ethyl-, Propyl-, Butyl- oder Pentylresten aufweisen. Vorzugsweise ist die Mercaptoalkansäure insbesondere Mercaptoessigsäure oder Mercaptopropionsäure.

Durch das erfindungsgemäße Verfahren wird vorteilhafterweise ein degradierbares Biomaterial erhalten, das an den Vernetzungsstellen ein multifunktionelles Verbindungselement aufweist. Dieses multifunktionelle Verbindungselement wird gebildet durch die Michael-Addition der Thiolgruppen der Mercaptoalkansäuren, mit der die mindestens dreiarmige Polyethylenglykolkomponente (im Folgenden wird Polyethylenglykol auch als PEG abgekürzt) funktionalisiert ist, also dem Michael-Donor, und den aktivierten Doppelbindungen, bevorzugt Acrylat-, Vinylsulfon- oder Maleimidgruppen, mit denen die oligo- oder polymere Komponente funktionalisiert ist, also dem Michael-Akzeptor. Das multifunktionelle Verbindungselement weist daher jeweils eine erste Estergruppe, eine Thioethergruppe mit 1 bis 10 C-Atomen und eine zweite Estergruppe oder eine elektronenziehende Gruppe auf. Die erste Estergruppe entsteht durch die Funktionalisierung der mindestens dreiarmigen PEG-Komponente mit Mercaptoalkansäuren, wobei die am Ende jeden PEG-Arms vorhandene Hydroxygruppe mit der Säuregruppe der Mercaptoalkansäure verestert wird. Bevorzugt sind erfindungsgemäß Mercaptoessigsäure und Mercaptopropionsäure. Die Thioether- und die zweite Estergruppe entstehen durch die Michael-Addition der Thiolgruppe der Mercaptoalkansäure mit einer Acrylatgruppe. Sollte die oligo- oder polymere Komponente mit einer Vinylsulfon- oder einer Maleimidgruppe funktionalisiert sein, so entsteht bei der Michael-Addition der beiden Komponenten keine zweite Estergruppe, die erste Estergruppe wird jedoch erfindungsgemäß bevorzugt durch diese elektronenziehenden Gruppen und die Thioethergruppe destabilisiert und so hydrolytisch labiler.

Das erfindungsgemäße Verfahren umfasst in bevorzugter Ausführung die Addition eines Michael-Donors und eines Michael-Akzeptors, wobei der Michael-Donor eine funktionalisierte mindestens dreiarmige PEG-Komponente ist, wobei der Michael-Akzeptor eine funktionalisierte oligo- oder polymere Komponente ist und wobei eine funktionelle Gruppe des Michael-Donors mit einer funktionellen Gruppe des Michael-Akzeptors reagiert: 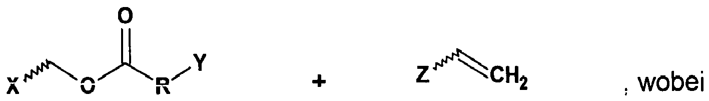 X = Arm der mindestens dreiarmigen PEG-Komponente,
Y = Nukleophile Thiolgruppe der Mercaptoalkansäure,
R = Struktureinheit mit 1 bis 10 C-Atomen der Mercaptoalkansäure, die mit zunehmender Länge einen stärkeren positiven induktiven Effekt ausübt und
Z = Seitenkette der oligo- oder polymeren Komponente mit aktivierter Doppelbindung ist, wobei der Michael-Donor mindestens drei funktionelle Gruppen Y und der Michael-Akzeptor mindestens zwei funktionelle Gruppen, also aktivierte Doppelbindungen aufweist,
und wobei unter Polymerisation und Hydrogelbildung ein Biomaterial mit multifunktionellem Verbindungselement: 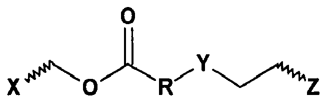 gebildet wird.

Unter Hydrolyse kann das gebildete Biomaterial degradiert werden zu Degradationsprodukten des Biomaterials, nämlich 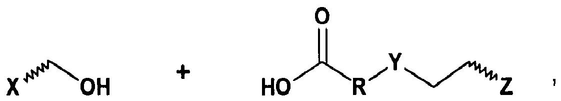 insbesondere Polyethylenglykolderivaten und funktionalisierten polymeren Säuren.

Vorzugsweise ist die mindestens zweiarmige PEG-Komponente PEG.

In bevorzugter Ausführungsform wird eine zweiarmige PEG-Komponente, also PEG, durch Polymerisation aus Ethylenoxid hergestellt. Mehrarmige PEG-Komponenten werden hergestellt aus Ethylenoxid und dem den erwünschten Verzweigungsgrad entsprechenden Polyalkohol. In bevorzugter Ausführungsform wird eine dreiarmige PEG-Komponente aus polymerisiertem Ethylenoxid und Glycerin hergestellt. In bevorzugter Ausführungsform wird eine vierarmige PEG-Komponente aus polymerisiertem Ethylenoxid und Pentaerythritol hergestellt.

Erfindungsgemäß bevorzugt hat eine funktionalisierte dreiarmige PEG-Komponente eine Molmasse M von mindestens 1000, insbesondere M = 1000 bis 1500, bevorzugt von M = 1100 bis 1400, besonders bevorzugt von M = 1200 bis 1300.

Erfindungsgemäß bevorzugt hat eine funktionalisierte oligo- oder polymere Komponente eine Molmasse M von mindestens 1000, bevorzugt von M = 1000 bis 5000, bevorzugt von M = 1200 bis 4500, besonders bevorzugt von M = 1500 bis 4000.

Die Funktionalität der funktionalisierten, bevorzugt mindestens dreiarmigen PEG-Komponente, beträgt erfindungsgemäß mindestens drei, d. h. erfindungsgemäß ist jeder Arm der mindestens dreiarmigen PEG-Komponente mit einer Mercaptoalkansäure funktionalisiert, wobei mindestens drei funktionelle Thiolgruppen entstehen. Die Funktionalität der oligo- oder polymeren Komponente beträgt erfindungsgemäß bevorzugt mindestens zwei, d. h. erfindungsgemäß wird die oligo- oder polymere Komponente mit mindestens zwei funktionellen Acrylat-, Vinylsulfon- oder Maleimidgruppen funktionalisiert. insgesamt ist die Funktionalität der erfindungsgemäßen Komponenten also bevorzugt größer oder gleich fünf. Dies erlaubt vorteilhafterweise die Herstellung eines dreidimensional vernetzten gelartigen Biomaterials. Für die erfindungsgemäß bevorzugten oligo- oder polymeren Komponenten, die mehr als zwei funktionalisierbare endständige Gruppen aufweisen, ist eine Funktionalisierung von 5 bis 25 %, bevorzugt 10 bis 15 %, besonders bevorzugt 12 % der funktionalisierbaren Gruppen bevorzugt.

Überraschenderweise konnte gefunden werden, dass ein dieses multifunktionelle Verbindungselement besitzendes Biomaterial eine besonders gezielt einstellbare Abbaubarkeit aufweist. Durch die aus dem Stand der Technik bekannte Michael-Addition einer Acrylat- und einer Thiolgruppe, beispielsweise von PEG-Dithiol und PEG-Triacrylat, entsteht nur eine Thioether-Estergruppe, deren hydrolytische Abbaukinetik nicht weiter gezielt einstellbar ist. Des Weiteren zeigen oszilative rheologische Untersuchungen, dass ein solches Hydrogel steifer, also gel-unähnlicher, ist als ein vergleichbares erfindungsgemäß aufgebautes Hydrogel. Dieses weist nämlich neben der im Stand der Technik beschriebenen Thioether-Estergruppe eine weitere Estergruppe (i) auf, die durch die Funktionalisierung der mindestens dreiarmigen Polyethylenglykolkomponente mit einer Mercaptoalkansäure entsteht. Vorteilhafterweise kann die durch das Vorhandensein von zwei Estergruppen bereits erhöhte Abbaukinetik weiterhin dadurch angepasst werden, dass durch die Länge der Mercaptoalkansäure, also der Struktureinheit, die Estergruppe (i) gezielt stabilisiert oder destabilisiert werden kann. Hierbei nimmt der positive induktive Effekt, der die Estergruppe gegenüber Hydrolyse stabilisiert, mit zunehmender Länge der Mercaptoalkansäure zu.

Bevorzugt sind die erfindungsgemäßen Hydrogele in einem Zeitraum von 2 bis 50 Tagen, insbesondere 2 bis 40 Tagen, insbesondere 2 bis 14 Tagen, besonders bevorzugt von 3 bis 12 Tagen degradiert. Durch das Vorhandensein von zwei Estergruppen, die hydrolytisch spaltbar sind, ergibt sich also eine erhöhte und somit schnellere Abbaubarkeit des vernetzten Biomaterials, wobei diese dann weiterhin durch die Variabilität der Länge der Mercaptoalkansäure noch gezielter einstellbar ist. Je nach intendierter Anwendung kann daher durch das erfindungsgemäße Verfahren ein in seiner Abbaukinetik speziell angepasstes Biomaterial hergestellt werden. Ein weiterer Vorteil besteht in der Biokompatibilität der Abbauprodukte des erfindungsgemäßen Biomaterials.

Das erfindungsgemäße degradierbare Biomaterial kann vorteilhafterweise zur Kultivierung von Zellen eingesetzt werden oder aber auch bei der Kultivierung von Gewebe, sei es ex vivo durch Besiedelung mit Zellen und Implantation in ein zu regenerierendes Gewebe oder in situ durch Bereitstellung einer Matrix, in welche Zellen einwandern können. Hierbei ist die gezielt einstellbare Degradierbarkeit des erfindungsgemäßen Biomaterials besonders vorteilhaft. Darüber hinaus besteht auch die Möglichkeit, das erfindungsgemäße Biomaterial zur Wirkstofffreisetzung, d. h. zur Freisetzung eines Biofaktors, zu verwenden, also als Biomaterial, aus dem in situ Biofaktoren räumlich und zeitlich gezielt freigesetzt werden können. Solche Wirkstoffe können beispielsweise Pharmazeutika, Arzneimittel oder sonstige natürliche oder synthetische Wirkstoffe sein, dass heißt Substanzen, die eine bestimmte Wirkung auf ein bestimmtes Zielgewebe ausüben.

In einer besonders bevorzugten Ausführungsform ist die im erfindungsgemäßen Verfahren eingesetzte mindestens dreiarmige Polyethylenglykolkomponente und die oligo- oder polymere Komponente biokompatibel und wasserlöslich bzw. hydrophil. Besonders bevorzugt sind auch die Abbauprodukte, die durch Hydrolyse des degradierbaren Biomaterials entstehen, nämlich PEG-Komponenten und polymere Säuren, biokompatibel. Besonders bevorzugt werden durch das erfindungsgemäße Verfahren homogene Hydrogele gebildet.

In einer besonders bevorzugten Ausführungsform ist das erfindungsgemäße degradierbare Biomaterial unter physiologischen Bedingungen herstellbar, dass heißt insbesondere bei einer Temperatur von 35 bis 39 °C, vorzugsweise 36 bis 38 °C, besonders bevorzugt bei einer Temperatur von 37 °C und einem pH-Wert von 7,0 bis 7,5, vorzugsweise 7,1 bis 7,4, besonders bevorzugt 7,2 bis 7,4.

In einer besonders bevorzugten Ausführungsform werden die einzelnen Komponenten im erfindungsgemäßen Verfahren in stöchiometrischem Verhältnis eingesetzt, sodass keine funktionellen Gruppen unreagiert vorliegen.

Besonders bevorzugt beträgt die Zeitspanne vom Vernetzen der Komponenten (Schritt c)) bis zum Erhalt eines vollständig vernetzten, gelierten Biomaterials (Schritt d)) von 3 bis 45 Minuten, bevorzugt 3 bis 30 Minuten, besonders bevorzugt von 5 bis 15 Minuten.

In einer besonders bevorzugten Ausführungsform wird Schritt c) des erfindungsgemäßen Verfahrens in der Gegenwart von Biokomponenten, insbesondere Zellen oder Geweben, durchgeführt. Es kann auch vorgesehen sein, dass Schritt c) des erfindungsgemäßen Verfahrens in Gegenwart von Biofaktoren, insbesondere Pharmazeutika, durchgeführt wird.

Hierbei kann der Biofaktor gegebenenfalls eine Thiolgruppe oder eine aktivierte Doppelbindung besitzen oder mit solchen funktionalisiert sein, sodass dieser beim Vernetzen der Komponenten, also bei Schritt c) des erfindungsgemäßen Verfahrens, ebenfalls eine kovalente Bindung eingeht, also mit vernetzt wird, und dann durch Hydrolyse über einen bestimmten Zeitraum freigesetzt wird. Der Biofaktor kann selbstverständlich auch bei Schritt c) des erfindungsgemäßen Verfahrens ohne eine funktionelle Gruppe mit den in den Schritten a) und b) bereitgestellten Komponenten vermischt werden und so im Biomaterial verkapselt werden. Bevorzugt ist der Biofaktor ausgewählt aus Peptiden, Proteinen, Nukleinsäuren, organischen Wirkstoffen, Apoptose-induzierenden Wirkstoffen, adhäsionsvermittelnden Wirkstoffen, wachstumshemmenden Wirkstoffen, entzündungshemmenden Wirkstoffen, Rezeptoragonisten und Rezeptorantagonisten, Proteinen der extrazellulären Matrix, Proteinen der Zelloberfläche, Antikörpern, Wachstumsfaktoren, Zuckern, Lektinen, Kohlenhydraten, Zytokinen, DNA, RNA und si-RNA oder Mischungen davon.

Das der Erfindung zugrunde liegende technische Problem wird auch gelöst durch die Bereitstellung eines degradierbaren Biomaterials, umfassend eine durch ein multifunktionelles Verbindungselement mit mindestens einer oligo- oder polymeren Komponente vernetzte mindestens dreiarmige Polyethylenglykolkomponente, wobei das multifunktionelle Verbindungselement folgende funktionelle Gruppen aufweist:
i) eine erste Estergruppe,
ii) eine Thioethergruppe mit 1 bis 10 C-Atomen
iii) eine zweite Estergruppe oder eine elektronenziehende Gruppe.

Besonders bevorzugt ist die mindestens eine oligo- oder polymere Komponente ausgewählt aus der Gruppe bestehend aus einer mindestens zweiarmigen Polyethylenglykolkomponente, Polyvinylalkohol, Polypropylenglykol, Gelatine und Fibrinogen. Soll das erfindungsgemäße degradierbare Biomaterial völlig zellneutral, dass heißt ausschließlich aus synthetischen und nicht-natürlichen Komponenten aufgebaut sein, beispielsweise für biomedizinische Anwendungen oder für eine gezielte nachträgliche Einbringung der enthaltenen Biofaktoren oder Signale, so ist die oligo- oder polymere Komponente bevorzugt ausgewählt aus der Gruppe bestehend aus einer mindestens zweiarmigen Polyethylenglykolkomponente, Polyvinylalkohol und Polypropylenglykol. Für Anwendungen, bei denen Teile des degradierbaren Biomaterials auf natürlichen Komponenten basieren können, ist die mindestens eine oligo- oder polymere Komponente bevorzugt ausgewählt aus Gelatine und Fibrinogen.

Die mindestens eine oligo- oder polymere Komponente des erfindungsgemäßen degradierbaren Biomaterials ist besonders bevorzugt funktionalisiert mit mindestens zwei funktionellen Gruppen ausgewählt aus der Gruppe bestehend aus Acrylat, Vinylsulfon und Maleimid. Diese aktivierte Doppelbindungen enthaltenen funktionellen Gruppen wirken während der Vernetzung als Michael-Akzeptor. Erfindungsgemäß wird unter einer Acrylatgruppe auch eine Methacrylatgruppe verstanden.

Besonders bevorzugt sind mindestens drei Arme der mindestens dreiarmigen Polyethylenglykolkomponente des erfindungsgemäßen degradierbaren Biomaterials mit jeweils einer Mercaptoalkansäure mit 1 bis 10 C-Atomen funktionalisiert. Dies führt jeweils zur Bildung einer ersten Estergruppe sowie einer reaktiven Thiolgruppe, die während der Vernetzung als Michael-Donor wirkt.

Gegenstand der vorliegenden Erfindung ist auch ein degradierbares Biomaterial, das gemäß des erfindungsgemäßen Verfahrens herstellbar ist.

Die vorliegende Erfindung betrifft ebenfalls einen Kit für die Herstellung eines degradierbaren Biomaterials, umfassend:
aa) eine mindestens dreiarmige Polyethylenglykolkomponente, wobei mindestens drei Arme der Polyethylenglykolkomponente mit jeweils einer Mercaptoalkansäure mit 1 bis 10 C-Atomen funktionalisiert sind und
bb) mindestens eine mit mindestens zwei Acrylat-, Vinylsufon- oder einer Maleimidgruppen funktionalisierte oligo- oder polymere Komponente, wobei die oligo- oder polymere Komponente ausgewählt ist aus der Gruppe bestehend aus einer mindestens zweiarmigen Polyethylenglykolkomponente, Polyvinylalkohol, Polypropylenglykol, Gelatine und Fibrinogen.

Besonders bevorzugt umfasst der erfindungsgemäße Kit cc) eine Biokomponente, insbesondere Zellen oder Gewebe.

Besonders bevorzugt liegen die Komponenten aa) und bb) als getrocknete Pulver oder in gepufferten Lösungen vor.

Die vorliegende Erfindung betrifft auch die Verwendung des erfindungsgemäßen degradierbaren Biomaterials zur Kultivierung oder Verkapselung von Biokomponenten, insbesondere Zellen oder Geweben.

Erfindungsgemäß kann auch vorgesehen sein, das erfindungsgemäße degradierbare Biomaterial zur Geweberegeneration oder Gewebezüchtung zu verwenden, insbesondere in Tissue-Engineering-Verfahren oder darauf basierten Produkten.

Besonders bevorzugt betrifft die vorliegende Erfindung auch die Verwendung des erfindungsgemäßen degradierbaren Biomaterials zur kontrollieren Freisetzung von Biofaktoren, insbesondere Pharmazeutika.

Weitere vorteilhafte Ausgestaltungen ergeben sich aus den Unteransprüchen.

Die Erfindung wird anhand der folgenden Beispiele und der dazugehörigen Figuren näher erläutert.

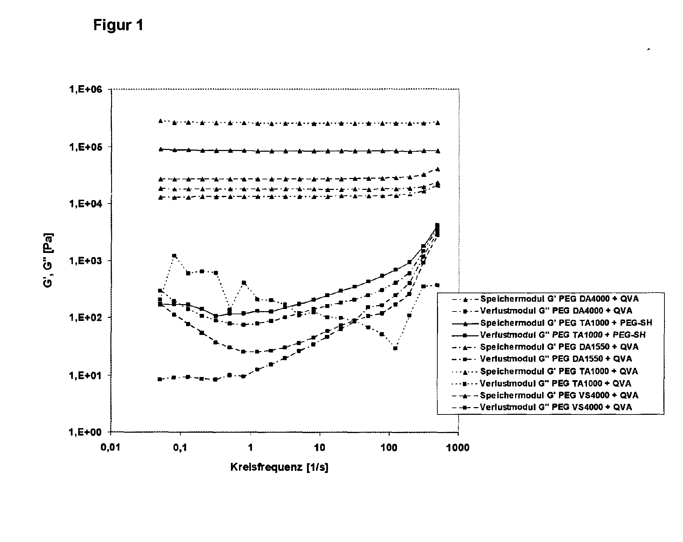

Figur 1 zeigt das komplexe Schubmodul verschiedener Hydrogele. Speichermodul (-▲-) und Verlustmodul (-■-) der synthetischen Hydrogele, gemessen im Frequenzsweep. PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon; Pa = Pascal.

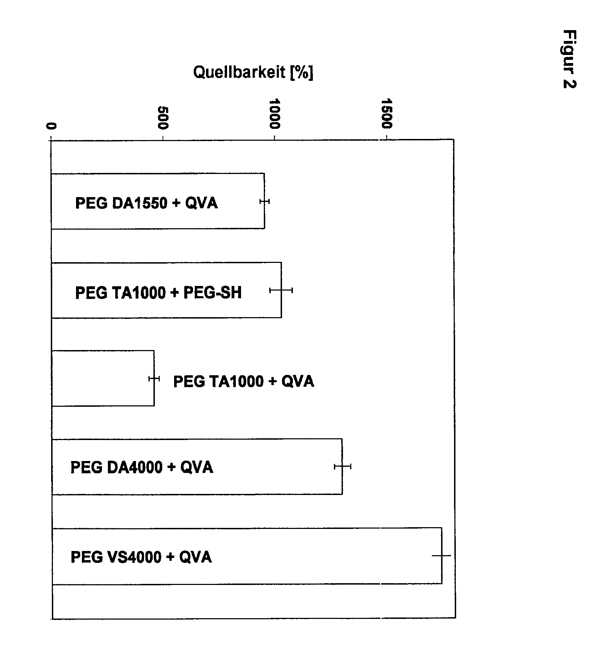

Figur 2 zeigt die Quellbarkeit verschiedener Hydrogele in Prozent. PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon.

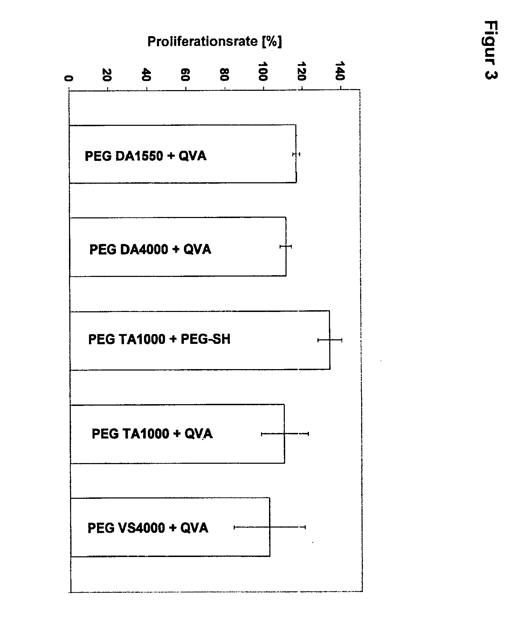

Figur 3 zeigt die Proliferationsrate von HaCaT-Zellen in verschiedenen Hydrogelen gegenüber Zellkulturmedium (DEMEM + 10 % FCS) als Referenz (= 100 %) in Prozent. PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon.

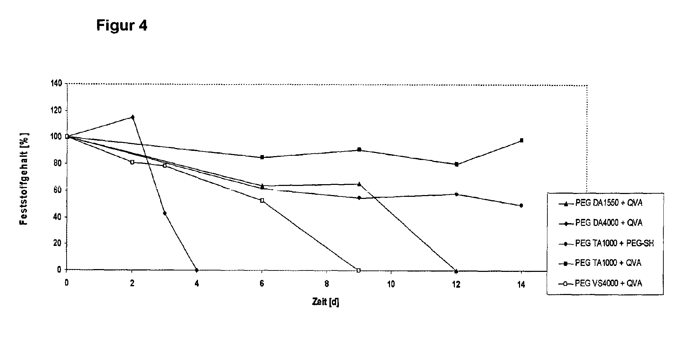

Figur 4 zeigt die Abbaukinetik verschiedener Hydrogele in PBS-Puffer über 14 Tage, wobei der Feststoffgehalt in Prozent angegeben ist. Zeit / d = Zeit in Tagen. PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon.

### Beispiel 1

### Herstellung der Einzelkomponenten

Aufbau mehrarmiger Polyethylenglykole

Mehrarmige Polyethylenglykolkomponenten werden industriell basenkatalysiert aus den entsprechenden Polyalkoholen und Ethylenoxid hergestellt (US 1,970,578; Sunder, Müllhaupt, et al. (2002), Advanced Materials 12: 235-239). Ein 3-armiges PEG-Derivat wird beispielsweise hergestellt aus Glycerin und polymerisiertem Ethylenoxid, wohingegen ein 4-armiges PEG-Derivat aus Pentaerythritol und polymerisiertem Ethylenoxid hergestellt wird.

Herstellung von funktionalisierten Oligomer- oder Polymerkomponenten als Michael-Akzeptoren

Die Acrylierung von mindestens zweiarmigen Polyethylenglykolkomponenten mit einer Molmasse von M = 1550 sowie 4000 erfolgte durch Umsetzung der PEG-Komponente mit Acryloylchlorid nach Elbert et al., Journal of Controlled Release, 2001, 76(1-2): S. 11-25.

Die Herstellung von zweiarmigem Polyethylenglykolvinylsulfon mit einer Molmasse von M = 4000 der Polyethylenglykolkomponente erfolgte aus Polyethylenglykol und Divinylsulfon in Gegenwart von Natriumhydrid nach einer modifizierten Synthesevorschrift nach WO 2009/064459 A2, wobei die Aufreinigung des Rohprodukts durch mehrmalige Extraktion der wässrigen Produktphase mit Diethylether und anschließendem Ausfällen in Diethylether durchgeführt wurde. Acrylierter Polyvinylalkohol mit einem Acrylierungsgrad von 12% und M = 13-27 kDa wurde aus Polyvinylalkohol und Acryloylchlorid nach US 2009/0269592 hergestellt.

Die Methacrylierung von Gelatine erfolgte nach der Synthesevorschrift Van Den Bulcke, Bogdanov, et al. (2000), Biomacromolecules 1: 31-38.

Herstellung der funktionalisierten mindestens dreiarmigen Polyethylenglykolkomponenten als Michael-Donor

Die Synthese der dreiarmigen PEG-Komponenten Glycerol polyethoxylat tris(3-mercaptoacetat) mit einer Molmasse von M = 1222 und Glycerol polyethoxylat tris(3-mercaptopropionat) (im Folgenden als QVA bezeichnet) mit einer Molmasse von M = 1264 erfolgte nach einer angepassten und modifizierten Synthesevorschrift von Polyethylenglykolen mit Mercaptoalkansäuren nach Nie, Baldwin, et al. (2007) Journal of Controlled Release 122: 287-296 sowie Businelli, Deleuze, et al. (2000), Macromolecuar Chemistry and Physics 201: 1833-1839, wobei Glycerol polyethoxylat und eine Katalysatorlösung aus p-Toluolsulfonsäure in Wasser in Toluol gelöst wurde. Anschließend wurde die entsprechende Menge an Mercaptoessigsäure bzw. Mercaptopropionsäure zugeben und bis zur vollständigen Umsetzung bei 115 °C unter Rückfluss erhitzt. Die Reaktionslösung wird zur Trockne eingeengt und durch mehrmalige Extraktion mit Diethylether aufgereinigt. Das Produkt wird im Feinvakuum getrocknet und unter Argon bei -23 °C gelagert.

### Beispiel 2

Herstellung eines erfindungsgemäßen degradierbaren Biomaterials

Michael-Addition einer mit Mercaptoalkansäuren funktionalisierten dreiarmigen Polyethylenglykolkomponente mit Polyethylenglykoldiacrylaten

Die vollständige Gelierung von Polyethylenglykoldiacrylaten PEG DA) mit verschiedener Molmasse (M = 1550 g/mol, M = 4000 g/mol) mit aktivierter Doppelbindung als Michael-Akzeptor und Glycerol polyethoxylat tris(3-mercaptopropionat) (QVA) mit einer Molmasse von M = 1264 g/mol als funktionalisierte dreiarmige PEG-Komponente (Michael-Donor) wurde durch die stöchiometrische Reaktion der beiden Komponenten in Wasser und Zellmedium realisiert. Die Polyethylenglykoldiacrylate wurden in einer Konzentration von 0,5 g·mL-1 in Wasser vorgelegt und mit entsprechender Menge der funktionalisierten dreiarmigen PEG-Komponente gelöst in Wasser versetzt. Danach wurde bis zum Erreichen der zellspezifischen Osmolarität Zellmedium zugegeben. Nach kurzem Vortexen und Inkubation bei 37 °C wird nach wenigen Minuten ein Hydrogel erhalten.

Michael-Addition einer mit Mercaptoalkansäuren funktionalisierten dreiarmigen Polyethylenglykolkomponente mit Polyethylenglykolvinylsulfonen und acryliertem Polyvinylalkohol

Die Umsetzung eines Polyethylenglykolvinylsulfons (PEG VS) mit einer Molmasse von M = 4000 g/mol mit aktivierter Doppelbindung sowie eines acrylierten Polyvinylalkohols mit einem Acrylierungsgrad von 12% und einer Molmasse von M = 13-27 kDa als Michael-Akzeptoren mit Glycerol polyethoxylat tris(3-mercaptopropionat) M = 1264 g/mol (QVA) erfolgte analog der oben beschriebenen Synthesevorschrift für die Umsetzung der Polyethylenglykolacrylate, wobei der acrylierte Polyvinylalkohol in einer Konzentration von 0,07 g·mL-1 vorgelegt wurde.

Michael-Addition einer mit Mercaptoalkansäuren funktionalisierten dreiarmigen Polyethylenglykolkomponente mit Polyethylenglykoldiacrylaten und methacrylierter Gelatine

Zur Herstellung eines Hydrogels mit 3 Masse-% Gelatine im Polymeranteil wurden 0,1 ml einer wässrigen methacrylierten Gelatinelösung (0,062 g/l) mit einer Lösung bestehend aus 0,1 g PEG DA1550 und 0,06 g Glycerol polyethoxylat tris(3-mercaptopropionat) (QVA) gelöst in 0,4 ml einer Mischung aus Wasser und Zellmedium versetzt. Ein stabiles Gel wird bei 37 °C nach 30 min erhalten.

### Beispiel 3

### Charakterisierung und Untersuchung verschiedener Hydrogele hinsichtlich ihrer rheologischen Eigenschaften, Quellbarkeit, Biokompatibilität sowie des Degradationsverhaltens

Erfindungsgemäße Hydrogele, aufgebaut aus mit aktivierten Doppelbindungen funktionalisierten Polyethylenglykolkomponenten (im Folgenden als PEG DA4000, PEG DA1550, PEG VS1000 und PEG TA1000 bezeichnet) und mit Mercaptopropionsäure funktionalisierten dreiarmigen Polyethylenglykolkomponenten (Glycerol polyethoxylat tris(3-mercaptopropionat); im Folgenden als QVA bezeichnet) wurden untersucht. Zum Vergleich wurde ein Hydrogel aus dem Stand der Technik, aufgebaut aus Polyethylenglykoldithiol M = 1019 und einem dreiarmigen Polyethylenglykoltriacrylat M = 1000 (im Folgenden als PEG TA1000 + PEG-SH bezeichnet), das keine zusätzliche Estergruppe aufweist, charakterisiert.

### Oszilative rheologische Untersuchungen

Es wurde das komplexe Schubmodul verschiedener Hydrogelzusammensetzungen bestimmt. In Abbildung 1 ist das Verlust- und Speichermodul eines Frequenzsweeps aufgetragen. Die komplexen Schubmodule G* sind in Tabelle 1 aufgelistet. Das hohe komplexe Schubmodul G* des aus zwei funktionalisierten dreiarmigen Polyethylenglykol-Komponenten bestehenden PEG TA1000 + QVA korreliert mit der stärkeren Vernetzung dieses Hydrogels.

**Tabelle 1**

| **Hydrogel** | **Komplexes Schubmodul G*/MPa** |
|---|---|
| PEG DA4000 + QVA | 17,7±2,1 |
| PEG DA1550 + QVA | 13,2±5,1 |
| PEG VS4000 + QVA | 26,9 ± 1,7 |
| PEG TA1000 + QVA | 256 ± 51,2 |
| PEG TA1000 + PEG-SH | 84,3 ± 6,5 |

PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon; G* / MPa = komplexes Schubmodul in Milipascal.

Vergleicht man jedoch erfindungsgemäße Hydrogele, aufgebaut aus der mit Mercaptopropionsäure funktionalisierten dreiarmigen PEG-Komponente (z. B. PEG DA1550 + QVA), mit dem Hydrogel aus dem Stand der Technik (PEG TA1000 + PEG-SH), welches aufgrund der ähnlichen Molmassen der Oligomer-/Polymerkomponenten eine vergleichbare Maschenweite besitzt, so ist ersichtlich, das das PEG TA1000 + PEG-SH-Hydrogel steifer (gel-unähnlicher) ist als das erfindungsgemäße Hydrogel PEG DA1550 + QVA.

### Bestimmung der Quellbarkeit der Hydrogele

Die Quellbarkeit der gewaschenen und getrockneten Hydrogele wurde in PBS-Puffer durchgeführt. Nach 24-stündiger Lagerung bei Raumtemperatur wurde die Massezunahme in Bezug auf das Trockengewicht bestimmt.

Stark vernetze Hydrogele, wie das erfindungsgemäße PEG TA1000 + QVA System besitzen eine sehr geringe Quellbarkeit im Vergleich zu weitmaschigeren erfindungsgemäßen Hydrogelen (PEG DA4000 + QVA; siehe Tabelle 2 und Figur 2). Das weitmaschigere erfindungsgemäße Hydrogel PEG DA1550 + QVA und das aus dem Stand der Technik bekannte Hydrogel PEG TA1000 + PEG-SH, besitzen ähnliche Molmassen der Oligomer-/Polymerkomponenten und somit eine vergleichbare Maschenweite des Polymernetzwerks. Dies führt zu einem vergleichbaren Quellverhalten beider Hydrogele (siehe Tabelle 2 und Figur 2), die damit vermutlich auch ähnliche hydrophile Eigenschaften aufweisen.

**Tabelle 2**

| **Hydrogel** | **Quellbarkeit / %** |
|---|---|
| PEG DA4000 + QVA | 1297 ± 35 |
| PEG DA1550 + QVA | 955 ± 19 |
| PEG VS4000 + QVA | 1739 ± 41 |
| PEG TA1000 + QVA | 456 ± 23 |
| PEG TA1000 + PEG-SH | 1027 ± 49 |

PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon.

Biokompatibilitätstests der Polymerkomponenten zur Verkapselung von lebenden Zellen

Die Viabilität von primären humanen Fibroblasten gegenüber den erfindungsgemäßen Komponenten PEG DA4000 und der mit Mercaptopropionsäure funktionalisierten dreiarmigen PEG-Komponente QVA wurde bestimmt. Die Zellen wurden 1 min mit der jeweiligen Oligomer-/Polymerlösung (gelöst in Zellmedium) inkubiert. Hierbei wurden Konzentrationen der Oligomer-/Polymerlösungen gewählt, die den beim Aufbau der Hydrogele verwendeten (siehe oben) entsprechen. Die Viabilität wurde mittels Trypanblau visualisiert und mikroskopisch ausgewertet (siehe Tabelle 3).

Im Vergleich zur Negativkontrolle, reinem Zellmedium, konnten ähnliche Viabilitäten der humanen Fibroblasten beobachtet werden. Beide Komponenten, Michael-Akzeptor PEG DA4000 als auch Michael-Donor QVA, sind innerhalb der für den Aufbau stabiler Hydrogele relevanten Konzentrationen biokompatibel und somit zur Verkapselung oder Kultur von lebenden Zellen geeignet.

**Tabelle 3**

| **Lösung** | **Mittelwert Viabilität / %** |
|---|---|
| PEG DA4000 in Zellmedium | 91,7 |
| 0,166 g/ml | |
| QVA in Zellmedium | 89,3 |
| 0,14 g/ml | |
| Negativkontrolle - Zellmedium | 90,1 |

PEG DA = Polyethylenglykoldiacrylat, QVA = dreiarmiges Glycerol polyethoxylat tris(3-mercaptopropionat) M = 1264 g/mol,

Biokompatibilitätstests der Hydrogele nach DIN EN ISO 10993-5

Die Biokompatibilität der Hydrogele wurde nach DIN EN ISO 10993-5 mittels Extraktuntersuchung gegenüber HaCaT-Zellen (human adult low calcium high temperature keratinocytes) untersucht. Nach 72-stündiger Inkubation wurde die Zellproliferation mittels Tetrazolium-formazan-Lösung (MTS) bestimmt.

Die Proliferationsraten von HaCaT-Zellen nach Inkubation mit den erfindungsgemäßen Hydrogelen basierend auf Polyethylenglykoldiacrylaten beziehungsweise -vinylsulfon und Glycerol polyethoxylat tris(3-mercaptopropionat) beziehungsweise dem aus dem Stand der Technik bekannten PEG TA1000 + PEG-SH liegen alle über 100% (siehe Tabelle 4 und Figur 3) und sind somit biokompatibel. Referenz ist das Zellmedium (DMEM+10 % FCS) als Negativkontrolle = 100%.

**Tabelle 4**

| **Hydrogel** | **Proliferationsrate / %** |
|---|---|
| PEG DA4000 + QVA | 110,4 ± 1,5 |
| PEG DA1550 + QVA | 115,3 ± 4,4 |
| PEG VS4000 + QVA | 102,1 ± 18,2 |
| PEG TA1000 + QVA | 110,0 ± 12,3 |
| PEG TA1000 + PEG-SH | 133,9 ± 6,2 |

PEG DA = Polyethylenglykoldiacrylate verschiedener Molmassen, PEG TA = dreiarmiges Polyethylenglykoltriacrylat, QVA = dreiarmiges Glycerol polyethoxylat tris(3-mercaptopropionat) M = 1264 g/mol, PEG-SH = Polyethylenglykoldithiol M = 1019 g/mol, PEG VS = Polyethylenglykoldivinylsulfon.

Bestimmung der Abbaukinetik der polymeren Hydrogelnetzwerke

Das Degradationsverhalten der Hydrogele wurde in 0,1 M PBS-Puffer durchgeführt. Dazu wurden 0,5 ml Gele mit der Pufferlösung bei 37°C überschichtet. Proben wurden alle 3 Tage entnommen und der Feststoffgehalt des Gels bestimmt.

Aus Figur 4 ist zwar ersichtlich, dass erfindungsgemäße Hydrogele mit geringem Vernetzungsgrad (PEG DA4000 + QVA) schneller degradieren als das erfindungsgemäße hochvernetzte System PEG TA1000 + QVA. Wichtig ist jedoch, dass diejenigen erfindungsgemäßen Hydrogele, die aufgrund ihres Vernetzungsgrades und ihrer Maschenweite, beispielsweise PEG DA1550 + QVA und das aus dem Stand der Technik bekannte Hydrogel PEG TA1000 + PEG-SH relevante Unterschiede in ihrem Degradationsverhalten aufweisen, obwohl vergleichbare Molmassen der Komponenten und gleicher Vernetzungsgrad vorliegen. Ersteres ist bereits nach ca. 12 Tagen abgebaut, wohingegen das Hydrogel aus dem Stand der Technik nach 14 Tagen erst zu maximal 50 % abgebaut ist (siehe Figur 4). Die zusätzliche Estergruppe hat, wie klar erkennbar ist, einen relevanten Einfluss auf die Abbaukinetik der erfindungsgemäßen Hydrogele.

## Patentansprüche

1. Verfahren zur Herstellung eines degradierbaren Biomaterials, umfassend die Schritte:
a) Bereitstellen einer mindestens dreiarmigen Polyethylenglykolkomponente, wobei mindestens drei Arme der Polyethylenglykolkomponente mit jeweils einer Mercaptoalkansäure mit 1 bis 10 C-Atomen funktionalisiert sind,
b) Bereitstellen mindestens einer mit mindestens zwei Acrylat-, Vinylsulfon- oder einer Maleimidgruppen funktionalisierten oligo- oder polymeren Komponente, wobei die oligo- oder polymere Komponente ausgewählt ist aus der Gruppe bestehend aus einer mindestens zweiarmigen Polyethylenglykolkomponente, Polyvinylalkohol, Polypropylenglykol, Gelatine und Fibrinogen,
c) Vernetzen der in den Verfahrensschritten a) und b) bereitgestellten Komponenten und
d) Erhalten eines degradierbaren Biomaterials.

2. Verfahren gemäß Anspruch 1, wobei die mindestens dreiarmige Polyethylenglykolkomponente und die oligo- oder polymere Komponente biokompatibel und wasserlöslich sind.

3. Verfahren gemäß einem der vorhergehenden Ansprüche, wobei das Biomaterial unter physiologischen Bedingungen, insbesondere bei einer Temperatur von 35 bis 39 °C und einem pH-Wert von 7,0 bis 7,5, herstellbar ist.

4. Verfahren gemäß einem der vorhergehenden Ansprüche, wobei Schritt c) in der Gegenwart von Biokomponenten, insbesondere Zellen oder Geweben, durchgeführt wird.

5. Verfahren gemäß einem der vorhergehenden Ansprüche, wobei Schritt c) in Gegenwart von Biofaktoren, insbesondere Pharmazeutika, durchgeführt wird.

6. Degradierbares Biomaterial, umfassend eine durch ein multifunktionelles Verbindungselement mit mindestens einer oligo- oder polymeren Komponente vernetzte mindestens dreiarmige Polyethylenglykolkomponente, wobei das multifunktionelle Verbindungselement folgende funktionelle Gruppen aufweist:
i) eine erste Estergruppe,
ii) eine Thioethergruppe mit 1 bis 10 C-Atomen und
iii) eine zweite Estergruppe oder eine elektronenziehende Gruppe.

7. Degradierbares Biomaterial gemäß Anspruch 6, wobei die mindestens eine oligo- oder polymere Komponente ausgewählt ist aus der Gruppe bestehend aus einer mindestens zweiarmigen Polyethylenglykolkomponente, Polyvinylalkohol, Polypropylenglykol, Gelatine und Fibrinogen.

8. Degradierbares Biomaterial gemäß einem der Ansprüche 6 oder 7, wobei die mindestens eine oligo- oder polymere Komponente funktionalisiert ist mit mindestens zwei funktionellen Gruppen ausgewählt aus der Gruppe bestehend aus Acrylat, Vinylsulfon und Maleimid.

9. Degradierbares Biomaterial gemäß einem der Ansprüche 6 bis 8, wobei mindestens drei Arme der mindestens dreiarmigen Polyethylenglykolkomponente mit jeweils einer Mercaptoalkansäure mit 1 bis 10 C-Atomen funktionalisiert sind.

10. Degradierbares Biomaterial, herstellbar gemäß einem der Ansprüche 1 bis 5.

11. Kit für die Herstellung eines degradierbaren Biomaterials, umfassend:
aa) eine mindestens dreiarmige Polyethylenglykolkomponente, wobei mindestens drei Arme der Polyethylenglykolkomponente mit jeweils einer Mercaptoalkansäure mit 1 bis 10 C-Atomen funktionalisiert sind und
bb) mindestens eine mit mindestens zwei Acrylat-, Vinylsulfon- oder einer Maleimidgruppen funktionalisierte oligo- oder polymere Komponente, wobei die oligo- oder polymere Komponente ausgewählt ist aus der Gruppe bestehend aus einer mindestens zweiarmigen Polyethylenglykolkomponente, Polyvinylalkohol, Polypropylenglykol, Gelatine und Fibrinogen.

12. Kit gemäß Anspruch 11, umfassend:
cc) eine Biokomponente, insbesondere Zellen oder Gewebe.

13. Verwendung des degradierbaren Biomaterials nach einem der Ansprüche 6 bis 10 zur Kultivierung oder Verkapselung von Biokomponenten, insbesondere Zellen oder Geweben.

14. Verwendung des degradierbaren Biomaterials nach einem der Ansprüche 6 bis 10 zur Geweberegeneration oder Gewebezüchtung.

15. Verwendung des degradierbaren Biomaterials nach einem der Ansprüche 6 bis 10 zur kontrollierten Freisetzung von Biofaktoren, insbesondere Pharmazeutika.
